# EUROPEAN PATENT APPLICATION

(11) **EP 1 835 710 A1**
(43) Date of publication of application: **19.09.2007**
(21) Application number: 06300228.1
(22) Date of filing: 14.03.2006
(51) Int. Cl.: H04M 15/00, H04M 17/00

(54) **Charging for group communication services**

(71) Applicant: Hewlett-Packard Development Company, L.P., Houston, Texas 77070 (US)
(72) Inventor: O'Connel, John, 38053, Grenoble Cedex 09 (FR)
(74) Representative: Franks, Adam Peter

(57) **Abstract**

According to one aspect the present invention, there is provided a method of charging a plurality of subscribers (102,104,106) of a communication system for shared use of a group service (204), each user being chargeable through a billing system (116,118), comprising determining a charging policy to be applied during the use of the service, and causing a user (102,104,106) to be charged through their respective billing system (116,118) for their respective use of the service in accordance with the charging policy.

## Description

The present invention relates generally to the field of communications and, more particularly, to improvements in the ways in which users of communication systems may be billed for use of communication systems.

Billing is an essential element of many telephony and communication systems enabling users to be accurately and fairly charged for use made of such systems. In telephony networks, for example, billing exists in essentially two flavours: post-paid and pre-paid.

In post-paid billing, all call charges incurred by a subscriber during a billing period are consolidated and the subscriber is issued with an appropriate invoice, which is typically paid automatically by bank transfer or is charged to a credit card.

In pre-paid billing, a subscriber has an account with the telephone network provider, and the provider enables use of the telephone network typically only whilst the subscriber's account has a positive credit balance. Any charges incurred by the subscriber through use of the telephony network are deducted from his account, generally in real or in substantially real-time.

Generally speaking, in telephony systems, either the caller or the called party is billed for each charge incurring call made or received. However, whilst this approach has served well for many years there are many situations where such billing models are unsuitable or not well adapted.

Accordingly, one aim of the present invention is to overcome or alleviate at least some of the above-mentioned problems.

According to a first aspect of the present invention, there is provided a method of charging a plurality of subscribers of a communication system for use of a service, each user being chargeable through a billing system. The method comprises determining a charging policy to be applied during the use of the service, and causing a user to be charged through their respective billing system for their respective use of the service in accordance with the charging policy.

Advantageously, this enables new flexible charging policies to be defined and applied to shared communication sessions.

Suitably, the step of causing a user to be charged further comprises requesting, from their respective billing system, authorisation for the user to use the service, and allowing the user to use the service whilst authorisation is given.

Suitably, the charging policy comprises a first component defining the charges applicable to using the service, and a second component defining the way in which those charges are to be distributed to users of the service, and the step of causing the user to be charged further comprises distributing the charges defined in the first component in accordance with the second component.

Suitably, the step of distributing the charges further comprises recalculating the charges to be distributed in response to an event. An event may be any one of a change in the number of users, or a change in the applicable charges defined in the first component.

Suitably, the method is adapted for use with a pre-paid billing system and/or a post-paid billing system.

Suitably, the method is adapted for use where at least two different users are associated with billing systems provided by different billing system providers.

The method may further comprise modifying the second component of the charging policy during the use of the service.

According to a second aspect of the present invention, there is provided a billing distribution system for charging a plurality of subscribers of a communication system for use of a service, each user being chargeable through a billing system. The method comprises a charging policy store for storing a charging policy, and a billing system interface for causing a user to be charged through their respective billing system for use made of the service, the amount charged being determined by an accounting module in accordance with the charging policy.

According to a third aspect of the present invention there is provided a communication system adapted to operate in accordance with any of the above method claims, and/or including a billing distribution system as described above.

Embodiments of the invention will now be described, by way of non-limiting example only, with reference to the accompanying drawings, in which:
Figure 1 is a block diagram showing an overview of a telephony system according to the prior art;
Figure 2 is a block diagram showing an overview of a telephony system according to an embodiment of the present invention;
Figure 3 is a call flow diagram showing illustrative events between different elements of the system of Figure 2 in accordance with an embodiment of the present invention;
Figure 4 is a call flow diagram showing additional illustrative events between different elements of the system of Figure 2 in accordance with an embodiment of the present invention;
Figure 5 is a call flow diagram showing further illustrative events between different elements of the system of Figure 2 in accordance with an embodiment of the present invention;
Figure 6 is a block diagram showing the billing distribution system of Figure 2 in greater detail;
Figure 7 is a flow diagram outlining example processing steps that may be taken according to an embodiment of the present invention; and
Figure 8 is a flow diagram outlining example processing steps that may be taken according to an embodiment of the present invention.

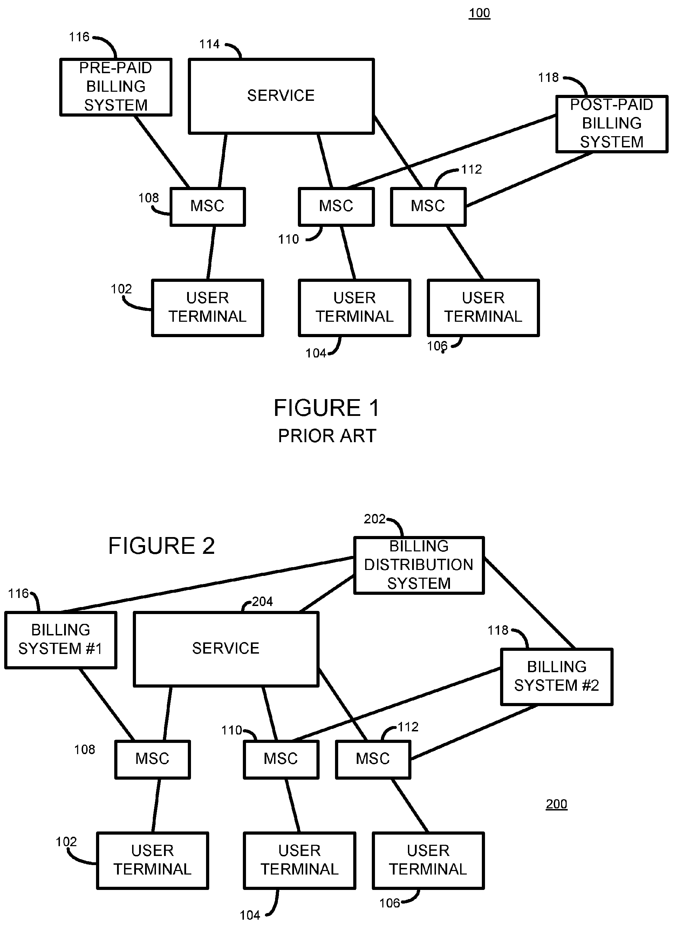

Referring now to Figure 1, there is a shown a block diagram showing an overview of a telephony system 100 according to the prior art.

The telephone system 100 comprises a number of user terminals 102, 104 and 106. In the present example the user terminals represent mobile telephones, and the telephony system 100 represents a mobile telephone system, although they could alternatively represent a PSTN telephony network and associated terminals, or suitable equivalents, as appropriate.

When a user of a user terminal 102, 104 and 106 makes a call a call establishment request is sent from the user terminal to a mobile switching centre (MSC) associated therewith, such as the mobile switching centre 108, 110 and 112. The MSC obtains, from the call establishment request, the telephone subscriber number associated with the user terminal and determines whether it can forward the call establishment request to the called destination.

In the present example each of the user terminals 102, 104 and 106 are used to call a telephone conferencing service 114 to enable the users of the user terminals to partake in a telephone conference. The user of the user terminal 102 has a pre-paid account managed by a pre-paid billing system 116. The users of the user terminals 104 and 106 have post-paid accounts managed by a post-paid billing system 118. Those skilled in the art will appreciate that the billing systems 116 and 118 could be operated by a single telephony network provider or, alternatively, could be operated by different telephony network providers.

When the MSC 108 receives a call establishment request from the user terminal 102 it determines that the user terminal 102 has an associated pre-paid account and asks the billing system 116 associated with the user terminal 102 for authorisation to complete the call. The authorisation is given by the billing system 116 dependent on the users account balance. If authorisation is given the call is completed in the normal manner. The billing system 116 typically authorises the call to continue for a predetermined amount of time, corresponding to an amount of money, after which the MSC has to re-request authorisation to continue the call from the billing system 116. Periodically the billing system 116 debits the cost of the ongoing call from the user's account balance. If the user's account balance reaches zero, authorisation is no longer given by the billing system and the MSC terminates the call.

When the MSC 110 receives a call establishment request from the user terminal 104 it determines that the user terminal 104 has an associated post-paid account. With post-paid accounts no account balance checks are typically required since the user has generally previously agreed, or contracted, with the telephony network provider supplying the billing system to pay, at the end of each billing period, for all call charges incurred during each billing period. Thus, the billing system 118 authorises the call for the complete duration of the call, and the MSC 110 forwards the call establishment request to the called destination. At the end of the call, the MSC generates a call data record (CDR) which it sends to the billing system 118 to enable appropriate billing for the call to be performed.

The same steps are taken when the user of the user terminal 106 makes a call to the conferencing service 114. Although Figure 1 represents both user terminals 104 and 106 being managed by the same billing system 118, it is equally possible that the user terminal 104 and 106 be on different mobile networks and therefore be associated with different billing systems.

In the present example, each of the participants to the conference is charged for their respective calls made to the conference service 114 at their individual applicable tariffs.

In addition to the call costs there is also a cost for using the conference service 114. This is typically paid for by the organizer of the conference, in this example the user of the user terminal 102. Typically the cost of using the conference service is billed to the user independently of any call costs, for example by sending the user a periodic invoice, or by directly debiting a bank account or credit card.

Since it is typically the organizer who pays for the use of the conference service the conference may be terminated automatically once the organizer leaves the conference, even if other users remain in the conference. This may be done, for example, to prevent the remaining users from making use of the conference service at the expense of the conference organiser after he has left the conference.

The conference service 114 may provide freephone telephone numbers for each of the users to call to participate in the conference. In this case, the cost of providing the freephone telephone access is also borne by the conference organiser, in addition to the costs of providing the conference facility itself.

There are numerous disadvantages, however, with current billing models, such as those described above. For example, if a telephone conference is organised by an enterprise, it may be reasonable that the enterprise pays for all costs relating to providing the conference. However, in other situations it may be preferably for the cost of the conference to be shared amongst all the participants, with the costs being shared either equally or using another cost distribution. For example, if a group of friends wish to participate in a telephone conference to discuss planning a holiday, it may be considered inappropriate that the organiser of the telephone conference be charged for the whole cost of the conference when the purpose of the conference is mutually beneficial to all participants.

The lack of flexibility of current billing models is not only unsuitable in many circumstances, but may also be discouraging users from holding telephone conferences or from using other group communication systems, such as push-to-talk sessions, where similar inflexible billing models are applied. Furthermore, the current situation may be causing group communication service providers to miss out on potential revenue.

Referring now to Figure 2, there is shown a block diagram of a system 200 according to an embodiment of the present invention. Features in common with Figure 1 are identified through use of like references. In addition to the features of Figure 1 is shown a billing distribution system 202 according to one embodiment of the present invention.

The service 204 is a group service, such as telephone conference service, which enables a group communication session to be established between two or more users using the service concurrently. Over the lifetime of the group communication session the number of users in the session may change, for example as users join and leave the session. The billing distribution system 202 is used by the service 204 to charge users directly, through their respective telephony billing systems, for their individual use made of the service in the context of the group communication session. The charging is made in accordance with a charging policy associated with the group communication session.

The charging policy may suitably comprise a user component and a service component. For example, the service component may define the cost of using the service, such as joining fees, per unit charges, variable rate charges and so on. The user component may define how the cost of the service is to be distributed to the participants of the group communication session.

The user component may define, for example, that the cost of the service is to be equally distributed amongst all the participants of the group communication session. An alternative user component may define, for example, that the organiser or initiator of the group communication session be charged for 90% of the whole cost of the group communication session, with the remaining charges to be distributed equally amongst the other participants of the group communication session.

The user component of the charging policy may be set in any suitable manner. For example, the first user to connect to the service may be invited, through a suitable voice interactive menu system, to determine the user component of the charging policy in any suitable manner. Alternatively, or additionally, the service may apply a default user charging policy which may be, as appropriate, redefined or modified by one or more participants to a group communication session. The user component of a charging policy may also be modifiable during a group communication session.

Once the user component of the charging policy to be applicable to the current group communication session has been determined the service may add the service component to the charging policy. The whole charging policy can then be communicated to the billing distribution system 202 which manages the billing of the service in accordance therewith, as described further below.

The billing distribution system 202 enables dynamic recalculation of the amount to be charged to each user, in accordance with the current charging policy, in response to different events. For example, a recalculation may be triggered when the number of participants to the group communication session changes. For example, an increase in the number of participants may lead to a decrease in the amount billed for each participant's use of the service if the cost of the service is shared amongst all the participants. On the other hand the amount billed for each participant's use of the service may increase when a participant leaves the group communication session. A recalculation may also occur, for example, if the cost of using the service changes whilst the group communication session is active. For example, the charging policy may define that use of the service is charged at a first rate during a first period, and at a second rate during a second period.

For example, the charging policy may define that the service is to be charged at $1.50 per minute and that the cost of the service is to be distributed equally among all concurrent users. In this case, if the group communication session initially comprises two users, the billing distribution system 202 will charge each of the two users $0.75 per minute for use of the service whilst there are two users in the session. If a third user joins the session, the billing distribution system 202 will charge, for the period whilst there are three users, each of the users $0.50 per minute. The billing distribution system 202 thereby enables flexible charging policies to be applied to users.

The user component of the charging policy may also be modifiable during a group communication session. For example, if one caller to the conference call is low on call credit, it may be mutually agreed, between the other callers to the conference, to modify the charging policy so that that caller is not charged for participating in the conference call, with the other callers sharing the cost between them in an agreed manner. This could be achieved, for example, using a suitable interactive voice application, a suitable web-based interface, or the like.

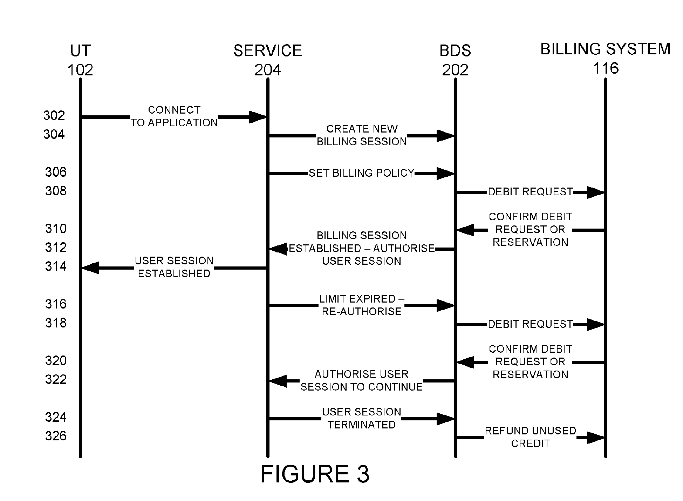

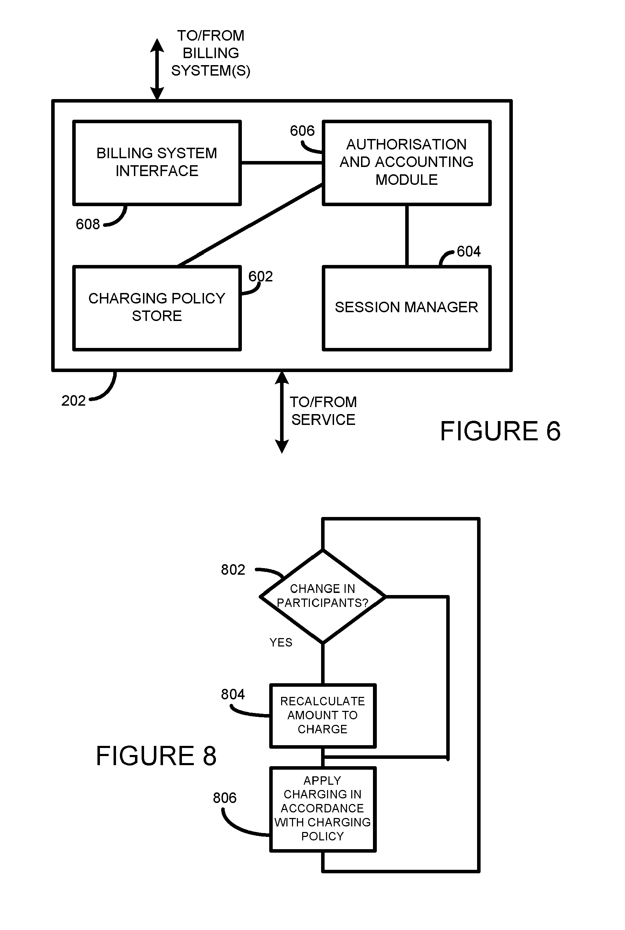

The billing distribution system 202 is shown in greater detail in Figure 6, and the operation of elements of Figure 2 will now be described with further reference to Figure 3, which is an example call flow diagram showing illustrative events between different elements of the system of Figure 2 in accordance with an embodiment of the present invention.

The user terminal 102 connects (302) to the service 204 in any appropriate manner, for example by calling a telephone number associated with the service 204. The service 204 creates a new group communication session and informs (304) the billing distribution system 202, causing the session manager 604 to create a new billing session, once the user terminal 102 has been authorised by the authorisation and accounting module 606.

When the charging policy has been determined the service 204 informs (306) the billing distribution system 202 of the charging policy to be applied to the current billing session, and the billing distribution system 202 stores the charging policy in a charging policy store 602. The billing distribution system 202 may apply a default charging policy until the charging policy has been set by the service 204.

An authorisation and accounting module 606 of the billing distribution system 202 makes a debit request (308) to the billing system 116 associated with the user terminal 102. The debit request is made through a billing system interface 608 which is able to communicate with remote billing systems using, for example, the CAMEL or other suitable protocols in a generally known manner, as will be appreciated by those skilled in the art.

The debit request (308) requests authorisation from the user's billing system for the billing distribution system 202 to debit the user's telephone subscriber account for use made of the service. If the billing system 116 is a post-paid billing system, the billing distribution system 202 receives from the billing system 116 a debit request confirmation which authorises the user session for the whole duration of the session.

In the case of pre-paid billing systems, however, the billing distribution system 202 sends a debit request (308) requesting the authorisation of an amount of money. The amount of money is suitably determined based on the applicable charging policy. The billing system 116 may respond with a debit request confirmation (310) authorising the amount of money, may respond with a debit request confirmation (310) authorising a different amount of money, or may refuse authorisation.

In the present example the billing system 116 is a pre-paid billing system, and hence the billing system 116 sends a debit request confirmation (310) to the billing distribution system 202. The billing distribution system 202, then indicates (312) to the service 204 that the user terminal is authorised to use a certain amount of money. The service 204 then establishes (314) a user session with the user terminal 102.

The service 202 keeps a track, for example using a suitable accounting module, of the amount of money authorised and available for each user. When, for any user, the amount has been consumed the service 204 requests the billing distribution system 202 to re-authorise (316) the user terminal 102 to continue using the service. The re-authorisation is performed in the same way, as described above, as for an initial authorisation (318, 320 and 322).

When the user session terminates, for example when the user terminal 102 hangs up, the service 204 informs (324) the billing distribution system 202. The session manager 604 informs the authorisation and account module 606 that the user has left the group communication session, and sends appropriate messages to the user's billing system to enable the user to be accurately billed for his use of the group communication session. For example, in the case of a pre-paid subscriber a refund request may be made to cause a refund of any unused reserved credit to be made back to the user's pre-paid account. In the case of a post-paid subscriber, an indication of the length of the call or amount to be charged for the use of the group communication session may be sent.

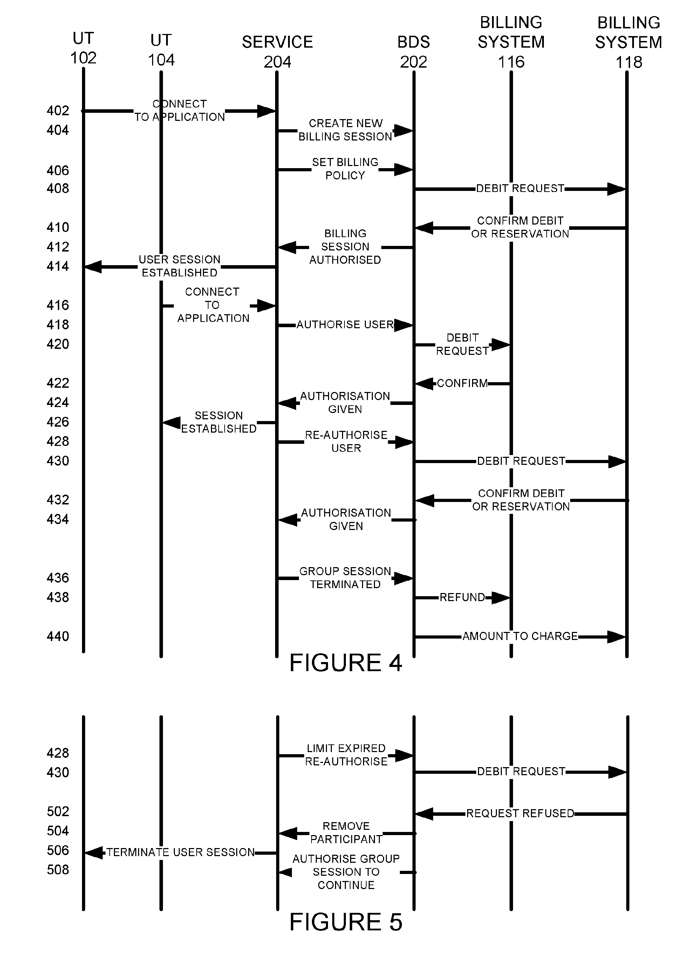

Figure 4 shows a further call flow in which two user terminals connect to the service 204. The initial events 402 to 414 shown in Figure 3 correspond to the events 302 to 314 of Figure 2.

A second user, for example the user of the user terminal 104, then connects (416) to the service 204 and to the same group communication session as that initiated when the user terminal 102 connected to the service. The service 204 requests the billing distribution system 202 to authorise (418) the new user and the session manager 604 adds the user to the billing session once authorisation has been obtained, as described above, through the authorisation and accounting module 606.

The authorisation and accounting module 606 makes a debit request (420) to the billing system 116 associated with the user terminal 104. In this case the billing system 116, being a post-paid billing system, authorises (422) the distributed billing system to charge the subscriber's account for the whole duration of the user session. The billing distribution system 202 sends this authorisation (424) to the service 204.

The service 204 then adds the user terminal 204 to the aforementioned group communication session (426) and the users of the user terminals 202 and 204 can use the service 204 in the appropriate manner.

When the reserved amount of money for the user terminal 102 has been consumed the service 204 requests (428) the billing distribution system 202 to re-authorise continued use of the service by the user, in the same manner as the original authorisation is obtained (430, 432, 434).

When the group communication session with the service 204 is terminated the service 204 informs (436) the billing distribution system 202. The accounting module 606 of the billing distribution system 202 finalises the accounting for the session and determines whether a refund (438) is required for the subscriber having the pre-paid subscriber account. For the subscriber having the post-paid account the billing distribution system 202 reports, in any suitable manner, the amount to be billed for the use made of the service to the appropriate billing system.

Figure 5 shows a further call flow showing the effect of a pre-paid subscriber running out of credit whilst using the service. A debit request (430) is sent from the authorisation and accounting module 606 to the billing system 118 which, due to an insufficient credit, refuses the request (502). The session manager 604 then removes the user from the billing session and informs (504) the service 204 to remove the user from the group communication session. The accounting module 606 recalculates the amount the remaining participants to the communication session are to be charged in accordance with the applicable charging policy, and applies the recalculated charges as appropriate.

The group communication session continues whilst there is least one user in the group communication session, and the billing distribution system 202 ensures that the users are charged for their use of the service, within the context of the group communication session, in accordance with the charging policy.

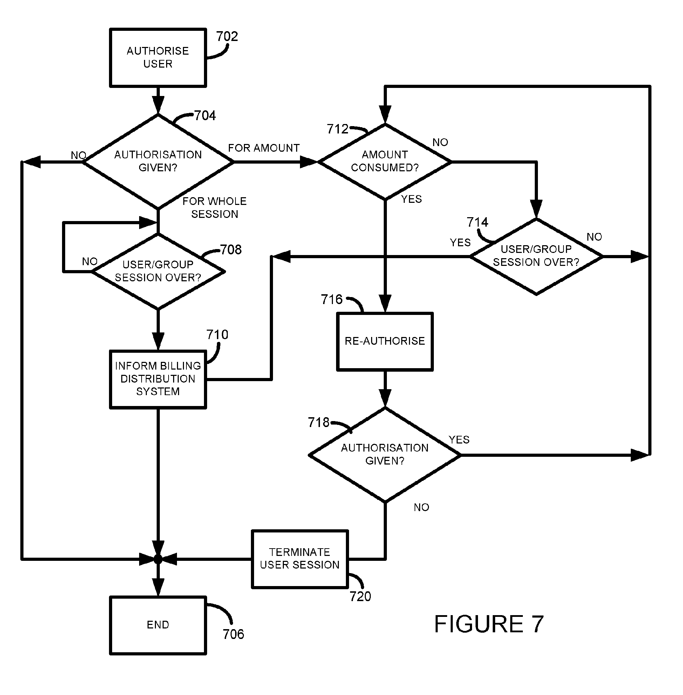

A summary of some of the processing steps taken by the service 204 is now given with reference to Figure 7, which is a flow diagram outlining example processing steps that may be taken by the service 204 according to one embodiment of the present invention.

At step 702 the service 204 requests, from the billing distribution system 202 authorisation for a user to use the service. If authorisation is not given (step 704) the user is refused use of the service.

If, at step 704, authorisation is given for the whole duration of the session step 708 waits for the user or group session to terminate. The billing distribution system 202 is informed (step 710) when the session terminates to enable the correct accounting to be applied.

If, at step 704, authorisation is given for only an amount of money, for example if the user is a pre-paid subscriber, a check is made to determine whether that amount has been consumed (step 712). If the amount has not been consumed a check is made (step 714) to determine whether the user or group session has terminated. If it has terminated, the billing distribution system 202 is informed at step 710 to enable the correct accounting to be applied.

If, at step 712, the amount of money has been consumed the service 204 requests re-authorisation (step 716) from the billing distribution system 202. If authorisation is not given (step 718) the user session is terminated (step 720). If further authorisation is given, the user may continue using the service until it is determined that the new amount of money obtained after re-authorisation period has been consumed (step 712) or until the user or group session terminates (step 714).

A summary of some of the processing steps taken by the billing distribution service 202 is now given with reference to Figure 8, which is a flow diagram outlining some example processing steps that may be taken by the billing distribution system 202 according to one embodiment of the present invention.

At step 802 the billing distribution system 202 determines whether the number of participants to the group communication session has changed. As previously described, the number of participants may change when a new participant joins the session, or when an existing participant leaves the session, or when an existing participant is no longer authorised to participate in the session. If the number of participants has changed the billing distribution system recalculates (step 804) the amount to charge each of the current participants to the session in accordance with the current charging policy applicable to the session. The calculated charging is then applied to the participants (step 806) in accordance with the current charging policy applicable to the session.

In a further embodiment the service component of the charging policy defines the cost of the service not in terms of a billable amount per unit of time, but at a billing amount per number of events. For example, the service 204 may provide an instant messaging service which has a default charging policy that defines the cost of using the service is charged at $1 per 50 messages, irrespective of whether the messages are sent or received. The user component of the charging policy may define that the cost is to be spread equally across the participants whilst they are in the group communication session.

For example, when the first user joins the session the service 204 requests authorisation from the billing distribution system 202 to charge $1 (the cost of 50 messages) from the first user's account.

When the second user joins the session the service 204 requests authorisation from the billing distribution system 202 to charge $0.50 (the cost of half of the 50 messages) from the second user's account.

The service 204 keeps a track of the number of messages sent and received and perform appropriate accounting to determine when all of the messages have been used. For example, when 50 messages have been exchanged, the first user will still have $0.50 credit within the service 204, whereas the second user will have zero credit, and the service 204 will again request authorisation from the billing distribution system 202 for the session to continue, which in turn will cause the billing distribution system 202 to debit $0.50 from each user's account (the shared cost of service defined minimum message amount, in accordance with the charging policy).

If at any time the number of participants to the session changes the service 204 appropriately recalculates the amount each user is to be charged and, as appropriate, informs the billing distribution system 202 accordingly.

When the session ends, depending on whether the charging policy permits refunds, any credit unused during the session may be refunded by appropriately informing the billing distribution system 202.

In a yet further embodiment, the service component of the charging policy defines the cost of the service in terms of data volume. In this embodiment the service 204 charges participants of a group communication session for the data volume consumed, in accordance with the charging policy, in a similar manner to that described above.

In yet still further embodiment, the service component of the charging policy defines the cost of the service in terms of a combination of any two or more of time-based, event-based, volume-based, content-based.

Although the above-described embodiments depict the billing distribution system 202 from being external to the service 204, those skilled in the art will appreciated that the billing distribution system 202, or at least some elements thereof, could be incorporated into the service 204 in any appropriate manner.

The above-described embodiments have been described primarily with reference to shared use of a service such as a telephone conferencing service however, those skilled in the art will appreciate that this is in no way limiting. For example, the methods and systems described above could, with appropriate modification, where required, be used for the billing of conventional two-party telephone calls, push-to-talk, instant messaging, or any other suitable kind of data sharing or shared communication system.

## Claims

1. A method of charging a plurality of subscribers of a communication system for use of a service, each user being chargeable through a billing system, comprising:
determining a charging policy to be applied during the use of the service; and
causing a user to be charged through their respective billing system for their respective use of the service in accordance with the charging policy.

2. A method according to claim 1, wherein the step of causing a user to be charged further comprises requesting, from their respective billing system, authorisation for the user to use the service, and allowing the user to use the service whilst authorisation is given.

3. A method according to claim 1 or 2, wherein the charging policy comprises a first component defining the charges applicable to using the service, and a second component defining the way in which those charges are to be distributed to users of the service, the step of causing the user to be charged further comprising distributing the charges defined in the first component in accordance with the second component.

4. A method according to claim 3, wherein the step of distributing the charges further comprises recalculating the charges to be distributed in response to an event.

5. A method according to claim 4, wherein the event is one of: a change in the number of users, or a change in the applicable charges defined in the first component.

6. A method according to any previous claim, adapted for use with a pre-paid billing system and/or a post-paid billing system.

7. A method according to any previous claim, adapted for use where at least two different users are associated with billing systems provided by different billing system providers.

8. A method according to any previous claim, further comprising modifying the second component of the charging policy during the use of the service.

9. A billing distribution system for charging a plurality of subscribers of a communication system for use of a service, each user being chargeable through a billing system, comprising:
a charging policy store for storing a charging policy; and
a billing system interface for causing a user to be charged through their respective billing system for use made of the service, the amount charged being determined by an accounting module in accordance with the charging policy.

10. A communication system adapted to operate in accordance with any of claims 1 to 8.
